# FASCICULE DE BREVET EUROPEEN

(11) **EP 0 480 827 B1**
(45) Date de publication et mention de la délivrance du brevet: **30.11.1994**
(21) Numéro de dépôt: 91402692.7
(22) Date de dépôt: 09.10.1991
(51) Int. Cl.: B64D 29/08

(54) **Système de sécurité mécanique**
Automatische Sicherungsanlage
Device for mechanical security

(30) Priorité: 10.10.1990 FR 9012478
(43) Date de publication de la demande: 15.04.1992
(73) Titulaire: HISPANO-SUIZA Société anonyme dite:, F-92213 Saint Cloud (FR)
(72) Inventeur: Baudu, Pierre André Marcel, F-76280 Angerville l'Orcher (FR); Marescot, Jean-Marc Daniel Louis, F-76610 Le Havre (FR); Vauchel, Guy Bernard, F-76610 Le Havre (FR); Soulier, Pascal-Marie Paul Marcel, F-76000 Le Havre (FR)
(74) Mandataire: Berrou, Paul

(56) Documents cités:
- EP-A- 0 393 259
- US-A- 4 613 099

## Description

L'invention concerne un système de sécurité mécanique utilisable notamment pour les aéronefs.

On utilise de nombreux systèmes de sécurité mécanique dans les aéronefs. C'est le cas notamment lorsque l'on veut empêcher la fermeture d'un élément de protection tel qu'un capot dès lors qu'un élément structural interne à la protection n'a pas été remis en place.

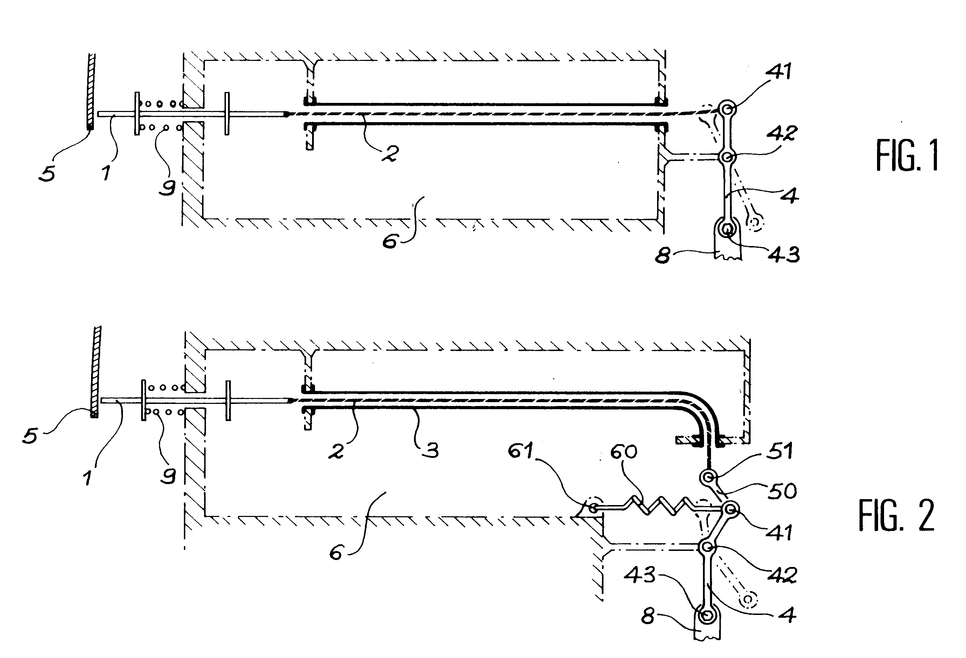

Le dispositif représenté sur la figure 1 constitue un système de sécurité de ce type conformément à l'art antérieur. Comme on peut le voir sur cette figure, le dispositif comprend un pion de blocage 1 relié par un câble 2 directement à un levier de manoeuvre 4. Le système de sécurité est par ailleurs fixé à un bâti 6 qui se trouve sous la protection du capot 5. Un élément structural 8 est, lorsqu'il est en place, relié au bâti 6 au moyen de l'articulation terminale 43. L'autre articulation terminale 41 est reliée par le câble 2 au levier 4.

Lors de la mise en place de l'élément structural 8, on fait pivoter le levier autour de son axe de pivotement pour le mettre dans la position verrouillage telle que représentée sur cette figure 1 et on fixe par une goupille ou une vis l'articulation 43 à l'élément 8.

Lorsque cet élément structural 8 est fixé à l'articulation 43, le levier 4 tire sur le câble 2 à partir de l'articulation 41. Le pion 1 est tiré par le câble. Un ressort de rappel 9 du pion 1 de blocage est comprimé par le mouvement recul du ressort 9. Le capot 5 peut être fermé.

A l'ouverture du capot 5, dès que l'élément 8 est retiré, le pion 1 reprend sa position initiale sous l'action du ressort 9 qui assure son déploiement.

Or, en pratique, on constate que la fermeture du capot peut avoir lieu même en l'absence de l'élément structural 8. En effet, il suffit de venir exercer un effort de poussée sur le pion 1 pour que ce dernier se rétracte et laisse le passage au capot 5, indépendamment de la présence ou non de l'élément structural 8 à l'intérieur. Ainsi, lorsque le pion 1 est poussé, le levier de manoeuvre 4 peut librement pivoter autour de l'axe 42 pour se placer dans la position verrouillage, que le verrouillage de l'élément structural 8 ait eu lieu ou non.

Le système de sécurité selon l'invention permet de résoudre ce problème.

Le système de sécurité selon l'invention est irréversible, c'est-à-dire que le capot ne pourra être refermé que lorsque l'élément structural sera remis en place.

L'invention a plus précisément pour objet un système de sécurité mécanique fixé dans un bâti pour empêcher la fermeture d'un élément de protection dans le cas où un élément structural interne à la protection n'a pas été remis en place, le système comportant un bâti, un élément de protection, un élément structural interne à la protection, relié audit bâti, lorsqu'il est en place, par l'intermédiaire d'un levier de manoeuvre qui est lui-même relié par un câble à un pion de blocage dudit élément de protection, un ressort de rappel étant interposé entre ledit pion et le bâti, à l'extrémité du câble opposé au levier, caractérisé en ce qu'il comporte en outre des moyens de maintien du levier de manoeuvre, disposés au-delà de l'extrémité dudit câble opposée au pion, bloquant ainsi, lorsque l'élément structural n'est pas en place, la rétraction du pion sous l'effet d'un effort de poussée sur le pion, tandis que lorsque l'élément structural est remis en place, lesdits moyens de maintien sont libérés et le levier est actionné, le pion étant alors retiré contre la compression du ressort de rappel par l'action du levier et l'intermédiaire du câble.

Selon une autre caractéristique de l'invention, le système comporte en outre des moyens de rappel reliés d'une part au bâti et, d'autre part, à la troisième articulation du levier et une biellette reliée par une extrémité à cette troisième articulation et par l'autre extrémité au câble.

Selon un mode de réalisation, les moyens de rappel sont constitués par un ressort.

Selon une autre caractéristique de l'invention, le système comporte des moyens de préhension.

Les caractéristiques et avantages de l'invention apparaîtront à la lecture de la description qui va suivre, donnée à titre illustratif mais non limitatif, en référence aux dessins sur lesquels :
- la figure 1 représente le schéma de principe d'un système de sécurité selon l'art antérieur,
- la figure 2 représente le schéma de principe d'un système de sécurité selon l'invention,
- la figure 3 représente le schéma de réalisation d'un système de sécurité conforme à l'invention, l'élément structural 8 étant mis en place,
- la figure 4 représente le système selon la figure 3, mais dans lequel la pièce 8 a été retirée,
- la figure 5 représente le levier et la biellette correspondant au cas de la figure 3, mais sous une vue de côté par rapport à la figure 3.

Dans toute la description, les mêmes références se rapportent aux mêmes éléments.

La figure 1, déjà décrite, représente le schéma d'un système de sécurité selon l'art antérieur.

Sur la figure 2, qui représente le schéma de principe d'un système de sécurité conformément à l'invention, on peut voir un moyen de protection de type capot 5 et un bâti 6, sur lequel est monté le système de sécurité. Ce système comporte un pion 1 relié à un câble 2 logé dans une gaine 3. Le câble est lui même relié à un levier de manoeuvre 4 par l'intermédiaire d'une biellette 50.

La jonction entre le câble et la biellette se fait par une articulation 51.

La jonction entre cette biellette et le levier se fait par une articulation 41.

Le levier a son articulation centrale de pivotement 42 reliée au bâti 6. L'articulation terminale 41 du levier 4 est reliée au bâti par un point d'ancrage 61. Cette liaison est réalisée par un moyen de rappel 60. Le moyen de rappel 60 est, dans l'exemple représenté, un ressort.

L'élément structural 8 est, lorsqu'il est en place, fixé au levier 4 au moyen de l'articulation terminale 43. La position verrouillée du système qui correspond à la mise en place de la pièce 8 est celle qui est représentée sur la figure en traits pleins, le ressort de rappel 60 étant tendu.

Un autre ressort intervient dans le système, il s'agit du ressort de rappel 9 qui est prévu pour assurer le déploiement du pion de blocage 1 lorsque le capot est ouvert et que la pièce 8 a été désolidarisée du levier 4.

Le fonctionnement est le suivant :

Le capot est soulevé. La dépose de l'élément structural 8 consiste par exemple à retirer le moyen de liaison réalisé, telle une vis ou une goupille logée dans l'articulation 43. L'articulation 42 du levier est libérée et peut effectuer des mouvements de rotation sous l'entraînement du câble 2, lui-même mû par le pion 1 qui se déplace sous l'action du ressort 9.

Le câble entraîne le levier 4 par l'intermédiaire de la biellette 50 et du ressort de rappel 60 qui se détend. Le capot 5 ne peut être fermé lorsque le pion est déployé.

D'autre part, toute action telle qu'un effort de poussée sur le pion s'avère inefficace tant que la pièce 8 n'est pas remise en place.

En effet, la biellette 50 et le ressort 60 obligent le levier à dépasser la position d'alignement de l'articulation de pivotement 41 et des articulations 51 et 43.

Lorsque cette position est dépassée, la biellette vient en butée sur le levier 4 et interdit la rétractation du pion 1 dans son logement.

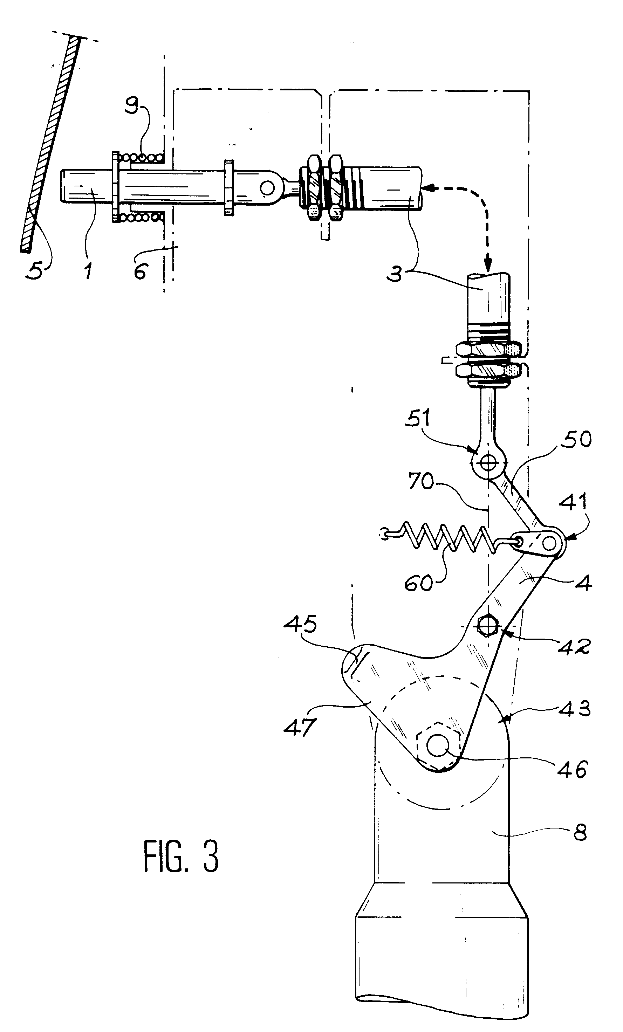

Les figures 3, 4 et 5 permettent de montrer une réalisation du système selon l'invention.

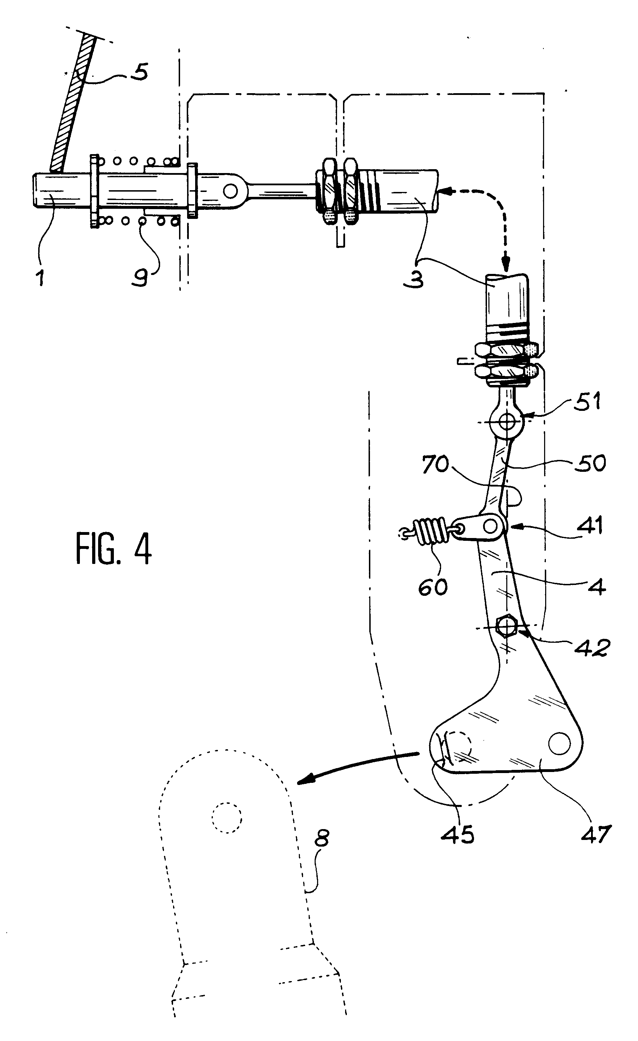

Les figures 3 et 4 montrent de façon détaillée le levier de manoeuvre 4 avec la biellette 50 et le ressort 60.

Sur la figure 3, le système est verrouillé, la pièce 8 étant fixée par une vis 46 au levier 4, le ressort 60 étant tendu et amenant l'articulation 41 à dépasser l'axe d'alignement 70.

Le levier 4 comporte une patte 47 munie d'une languette 45 proche de l'articulation 43, permettant de saisir cette partie extrême pour procéder à la pose de la pièce 8.

Sur la figure 4, la pièce 8 a été retirée. Le ressort 60 est détendu, ce qui ramène l'articulation 41 de l'autre côté de l'axe d'alignement 70.

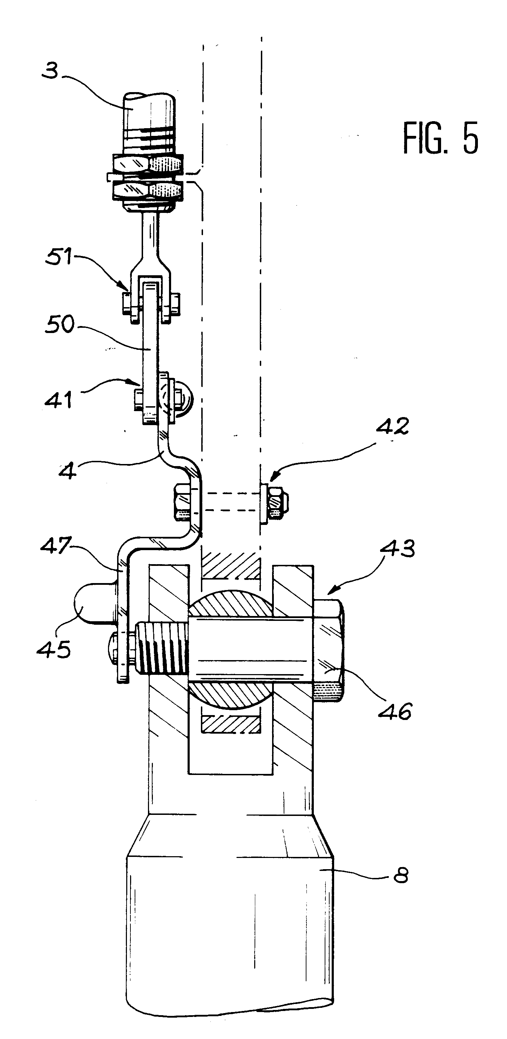

la figure 5 illustre de façon détaillée le levier de manoeuvre 4 et la biellette 50 correspondant au cas de la figure 3, mais vus de côté par rapport à la figure 3.

## Revendications

1. Système de sécurité mécanique comportant un bâti (6), un élément de protection (5), un élément structural (8) interne à la protection, relié audit bâti (6), lorsqu'il est en place, par l'intermédiaire d'un levier de manoeuvre (4) qui est lui-même relié par un câble (2) à un pion (1) de blocage dudit élément de protection (5), un ressort de rappel (9) étant interposé entre ledit pion (1) et le bâti (6), à l'extrémité du câble (2) opposé au levier (4) caractérisé en ce qu'il comporte en outre des moyens de maintien (50,60) du levier de manoeuvre (4), disposés au-delà de l'extrémité dudit câble (2) opposée au pion (1), bloquant ainsi, lorsque l'élément structural (8) n'est pas en place, la rétraction du pion (1) sous l'effet d'un effort de poussée sur le pion (1), tandis que lorsque l'élément structural (8) est remis en place, lesdits moyens de maintien (50,60) sont libérés et le levier (4) est actionné, le pion (1) étant alors retiré contre la compression du ressort de rappel (9) par l'action du levier (4) et l'intermédiaire du câble (2).

2. Système de sécurité selon la revendication 1, dans lequel le levier de manoeuvre (4) est relié par son articulation de pivotement (42) au bâti (6), par l'une des deux autres articulations à l'élément structural (8) lorsque ce dernier est en place, caractérisé en ce que les moyens de maintien en position déverrouillée (50, 60) comportent des moyens de rappel (60) reliés d'une part au bâti (6) et, d'autre part, à la troisième articulation (41) du levier (4) et une biellette (60) reliée par une extrémité à cette troisième articulation (41) et par l'autre extrémité au câble (2).

3. Système de sécurité selon la revendication 1 ou 2, caractérisé en ce que les moyens de rappel (60) sont constitués d'un ressort.

4. Système de sécurité selon l'une quelconque des revendications 1 à 3, caractérisé en ce que le levier (4) comporte des moyens de préhension (45) permettant de le saisir pour l'amener en position de verrouillage lors de la remise en place de l'élément structural (8).

## Claims

1. Mechanical safety system including a framework (6), a protective element (5), a structural element (8) internal to the protection, connected to the said framework (6), when it is in place, by means of an operating lever (4) which is itself connected by a cable (2) to a pin (1) for immobilizing the said protective element (5), a return spring (9) being interposed between the said pin (1) and the framework (6), at the opposite end of the cable (2) from the lever (4), characterized in that it further includes means (50, 60) for holding the operating lever (4), these means being located beyond the opposite end of the said cable (2) from the pin (1), thus preventing, when the structural element (8) is not in place, the retraction of the pin (1) under the effect of a thrust load on the pin (1), whereas when the structural element (8) is put back in place, the said holding means (50, 60) are released and the lever (4) is actuated, the pin (1) then being withdrawn against the compression of the return spring (9) through the action of the lever (4) and by means of the cable (2).

2. Safety system according to Claim 1, in which the operating lever (4) is connected via its pivot articulation (42) to the framework (6), via one of the other two articulations to the structural element (8) when the latter is in place, characterized in that the means (50, 60) for holding in the unlocked position include return means (60) which are connected on the one hand to the framework (6) and, on the other hand, to the third articulation (41) of the lever (4) and a connecting rod (60) connected by one end to this third articulation (41) and by the other end to the cable (2).

3. Safety system according to Claim 1 or 2, characterized in that the return means (60) consist of a spring.

4. Safety system according to any one of Claims 1 to 3, characterized in that the lever (4) includes grasping means (45) making it possible to grip hold of it in order to bring it into the locked position when the structural element (8) has been put back in place.

## Patentansprüche

1. Mechanisches Sicherungsystem mit einem Gehäuse (6), einem Schutzelement (5), einem zu schützenden inneren Konstruktionselement (8), das mit dem Gehäuse (6) mittels eines Bedienhebels (4) verbunden ist, der wiederum durch ein Kabel (2) mit einem Blockierstift (1) des Schutzelements (5) verbunden ist, wobei eine Rückholfeder (9) zwischen dem Stift (1) und dem Gehäuse (6) an dem Ende des Kabels (2) vorgesehen ist, das von dem Hebel (4) abgewandt ist,
dadurch **gekennzeichnet,**
daß es weiterhin Haltemittel (50,60) des Bedienhebels (4) aufweist, die jenseits des Endes des Kabels (2), das vom dem Stift (1) abgewandt ist, vorgesehen sind und so, wenn das Konstruktionselement (8) nicht in Sollstellung ist, das Zurückziehen des Stifts (1) unter Wirkung einer Schubkraft auf den Stift (1) blockieren, wohingegen die Haltemittel (50,60), wenn das Konstruktionselement in Sollstellung ist, freigegeben sind und der Hebel (4) betätigt ist, wobei der Stift (1) gegen das Zusammendrücken der Rückholfeder (9) durch die Wirkung des Hebels (4) und mittels des Kabels (2) zurückgezogen ist.

2. Sicherungsystem nach Anspruch 1, bei dem der Bedienhebel (4) über seine Anlenkung (42) mit dem Gehäuse (6) und durch eine von zwei weiteren Anlenkungen mit dem Konstruktionselement (8) verbunden ist, wenn letzteres in Sollstellung ist,
dadurch **gekennzeichnet,**
daß die Haltemittel in der entriegelten Stellung (50,60) Rückholmittel (60), die einerseits mit dem Gehäuse (6) und andererseits mit der dritten Anlenkung (41) des Hebels (4) verbunden sind, und einen Schwingarm (60) aufweisen, der mit einem Ende mit dieser dritten Anlenkung (41) und durch sein anderes Ende mit dem Kabel (2) verbunden ist.

3. Sicherungssystem nach Anspruch 1 oder 2,
dadurch **gekennzeichnet,**
daß die Rückholmittel (60) durch eine Feder gebildet sind.

4. Sicherungssystem gemäß einem der Ansprüche 1 bis 3,
dadurch **gekennzeichnet,**
daß der Hebel (4) Griffmittel (45) aufweist, die sein Ergreifen gestatten, um ihn in Verriegelungsstellung zu bringen während der Anbringung des Konstruktionselements (8) in Sollstellung.
